# FASCICULE DE BREVET EUROPEEN

(11) **EP 1 936 239 B1**
(45) Date de publication et mention de la délivrance du brevet: **06.04.2011**
(21) Numéro de dépôt: 07123728.3
(22) Date de dépôt: 19.12.2007
(51) Int. Cl.: F16H 57/02, F16D 9/06

(54) **Engrenage à protection de surcouple intégrée**
Getriebe mit integriertem Überlastschutz
Gear with built-in overtorque protection

(30) Priorité: 19.12.2006 FR 0655659
(43) Date de publication de la demande: 25.06.2008
(73) Titulaire: HISPANO SUIZA, 92700 Colombes (FR)
(72) Inventeur: Vassaux, Alain, 92800 Puteaux (FR)
(74) Mandataire: David, Daniel

(56) Documents cités:
- EP-A- 0 476 458
- DE-A1- 2 944 843
- DE-C1- 4 240 142

## Description

La présente invention concerne le domaine des engrenages, en particulier les engrenages présents dans des boîtes d'engrenages pour l'entraînement des machines auxiliaires dans une turbomachine.

Les engrenages sont utilisés dans toutes les branches de la mécanique pour transmettre des mouvements, de l'horlogerie jusqu'au réducteur de l'industrie lourde. Un engrenage est composé de deux pignons dentés, montés respectivement sur des arbres rotatifs. Un arbre menant entraîne en rotation un pignon, le pignon étant solidaire de l'arbre. Les dents du pignon menant engrènent avec les dents du pignon mené afin de transmettre le mouvement de rotation de l'arbre menant à l'arbre mené. Lorsque plus de deux pignons dentés sont engrenés, on parle de train d'engrenages.

Un train d'engrenages comprend une pluralité d'engrenages en série formant une chaîne cinématique. Un arbre moteur en amont de la chaîne cinématique entraîne en rotation un pignon dont il est solidaire. Des pignons du train d'engrenages, placés en aval de l'arbre moteur dans la chaîne cinématique, sont entraînés en rotation de proche en proche par la rotation de l'arbre moteur.

On désigne par la suite par pignons amont et aval, les pignons situés respectivement en amont et en aval dans la chaîne cinématique par rapport à un pignon donné, le pignon amont transmettant le mouvement de rotation au pignon donné, le pignon aval étant entraîné en rotation par le pignon donné.

Un train d'engrenages peut avantageusement entraîner en rotation une pluralité d'arbres à partir d'un arbre moteur, chaque arbre mené entraînant respectivement une machine. L'invention concerne en particulier un train d'engrenages présents dans les turboréacteurs pour l'entraînement des machines auxiliaires.

Dans un montage en série des engrenages, si un arbre mené est grippé ou immobilisé, le pignon solidaire de l'arbre ne peut plus tourner. Tous les pignons, de la chaîne cinématique, sont susceptibles d'être bloqués. Afin de permettre au train d'engrenage de continuer à fonctionner dans cette hypothèse, il est connu de prévoir des moyens fusibles.

Il existe dans l'art antérieur des engrenages formés de deux pignons montés sur des arbres munis de clavettes rectangulaires rapportées sur l'arbre. Les pignons comprennent respectivement des encoches rectangulaires au niveau de leur couronne interne correspondant avec la forme des clavettes. En fonctionnement, les pignons sont montés sur les arbres, les encoches maintenant les clavettes afin de solidariser le pignon à l'arbre.

Si un des arbres du train d'engrenages est grippé, le pignon, dont l'arbre est immobilisé, subit un surcouple généré par le pignon amont. Le surcouple fait céder la clavette désolidarisant le pignon par rapport à son arbre. Le pignon amont entraîne le pignon désolidarisé en rotation autour de l'arbre. La chaîne cinématique est maintenue mais pour une durée qui peut être relativement courte, car le pignon a tendance à se désaxer et à bouger transversalement et radialement, ceci pouvant aller jusqu'à l'arrêt de l'engrènement, les machines auxiliaires montées en aval n'étant alors plus alimentées. La perte de couple a une incidence sur les engrenages et en particulier sur les machines montées sur ces engrenages.

Un engrenage résolvent ce problème et présentant les caractéristiques du préambule de la revendication 1 est connu du document DE 42 40 142.

Un des buts de l'invention est de permettre à un pignon, dont l'arbre est immobilisé, de transmettre le mouvement de rotation à un pignon aval afin de conserver le rendement de la transmission par engrenage, tout en permettant un replacement rapide des pièces de l'engrenage aprés rupture.

A cet effet, la demanderesse propose un engrenage ayant les caractéristiques de la revendication 1.

Avantageusement, si un arbre solidaire d'un pignon auxiliaire d'un train d'engrenages est grippé ou immobilisé, le pignon, subissant un couple important, se désolidarise de l'arbre grâce à l'élément sécable faisant office de « fusible ». Le module de guidage, jusqu'ici en attente, est activé. Ce module permet de guider le pignon désolidarisé dans sa rotation dans le support. Malgré la défaillance, le rendement au niveau de l'engrenage est conservé.

Selon l'invention, l'élément sécable est monté de manière amovible entre le pignon et l'arbre.

De plus encore, l'élément sécable est formé d'un disque frété entre le pignon et l'arbre, le disque comprenant une pluralité de bras radiaux.

De préférence toujours, le module de guidage comprend des galets de guidage dont l'axe de rotation est orienté perpendiculairement ou parallèlement à l'axe de rotation de l'arbre.

Les galets permettent avantageusement de contraindre les mouvements axiaux et/ou transversaux du pignon désolidarisé pour guider sa rotation dans le support.

De préférence toujours le pignon comprend une partie de surface coopérant avec les galets.

Selon un autre aspect de l'invention, une boîte d'engrenages auxiliaires comprend une pluralité d'engrenages, dans laquelle au moins un des engrenages est un engrenage selon l'invention.

De préférence, la boîte d'engrenages entraîne des machines auxiliaires dans une turbomachine

Selon un autre aspect de l'invention, une turbomachine comprend une telle boîte d'engrenages.

L'invention sera mieux comprise à l'aide de la description suivante en référence au dessin annexé sur lequel :
- la figure 1 représente une vue en perspective de l'engrenage de l'invention avec un seul module de guidage ;
- La figure 2 représente une vue en perspective de l'engrenage de la figure 1 avec deux modules de guidage ; et
- La figure 3 représente une vue en coupe III-III de l'engrenage de la figure 2 dans une boîte d'engrenages.

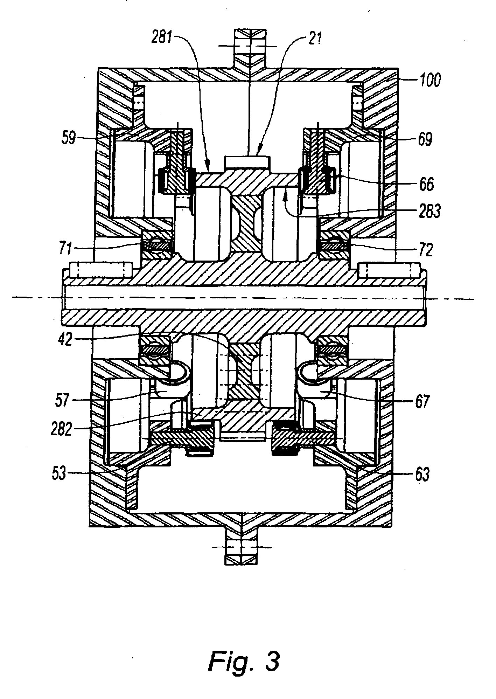

En référence à la figure 3, dans une forme de réalisation préférée de l'invention, un turboréacteur, non représenté, comprend une boîte d'engrenages 100. La boîte d'engrenages 100 a pour fonction d'entraîner des machines auxiliaires montées sur les arbres d'un train d'engrenages supporté dans la boîte 100. Une telle boîte 100 est désignée généralement par le sigle AGB pour « Accessory Gear Box ».

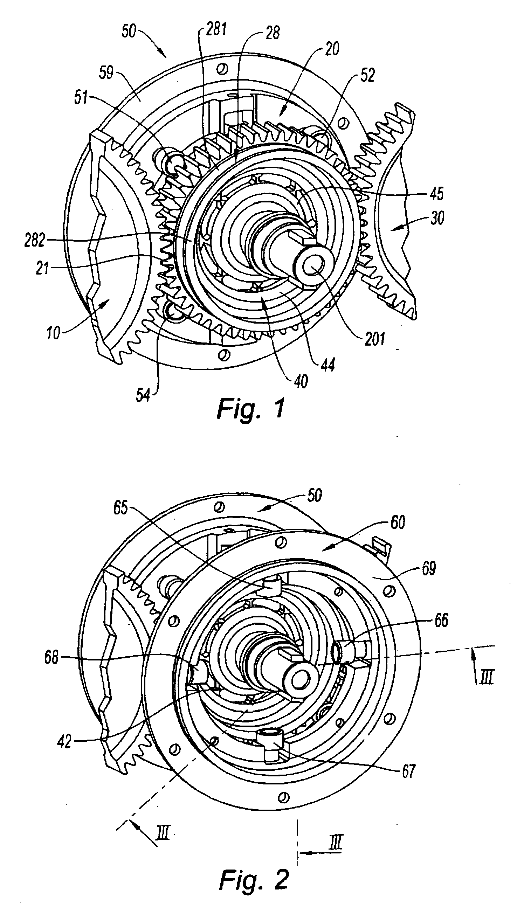

En référence à la figure 1, le train d'engrenages comprend ici trois pignons 10, 20, 30 munis respectivement de dents 11, 21, 31. Les pignons 10, 20, 30 sont disposés en série formant une chaîne cinématique. Un arbre moteur entraîne le pignon 10 en rotation. Le mouvement de rotation est transmis au pignon 20 par les dents 11 engrenées avec les dents 21, les pignons 10, 20 formant un premier engrenage, les pignons 20, 30 formant un deuxième engrenage.

Le pignon 20 est monté solidaire sur un arbre rotatif 201. Ainsi, lorsque le pignon 20 est entraîné en rotation par le pignon amont 10, il entraîne lui-même l'arbre 201.

L'arbre 201 est supporté par des paliers 71,72, disposés respectivement de chaque côté du pignon 20, pour guider la rotation de l'arbre 201 dans la boîte 100. Les paliers 71,72 se présentent ici sous la forme de roulements à billes.

Le pignon 20 comprend une couronne cylindrique 28 comportant une surface externe 281, une surface interne 283 et deux surfaces transversales d'extrémité 282. La surface externe 281 se compose de trois bandes, une bande centrale et deux bandes latérales. Les dents 21 sont disposées sur la bande centrale, les deux bandes latérales en étant dépourvues.

Un disque 40 est monté entre l'arbre 201 et la couronne 28 et solidarise l'arbre 201 au pignon 20, le disque étant avantageusement monté par frettage. Le disque 40 comprend deux couronnes concentriques 44, 45, la couronne extérieure 44 étant reliée à la couronne intérieure 45 par des bras radiaux 42.

La surface externe de la couronne 44 du disque 40 est en appui sur la surface interne 283 de la couronne 28, la surface interne de la couronne 45 étant solidaire de l'arbre 201.

Les bras 42 du disque 40 sont conformés de façon à avoir une portion « sécable » 422 agencée pour céder pour une valeur de couple, entre l'arbre 201 et le pignon 20, supérieure à une valeur seuil déterminée.

En référence à la figure 1, un module de guidage 50 est agencé pour guider le pignon 20 dans son mouvement de rotation à l'intérieur de la boîte 100 lorsque celui-ci n'est plus solidaire de l'arbre. Le module 50 est disposé, en attente, parallèlement au pignon 20.

Le module de guidage 50 comporte une pièce cylindrique 59 formant support pour des galets de guidage 51-58, les galets étant divisés en deux jeux de quatre galets de guidage 51-54,55-58 disposés respectivement sur chaque face transversale de la pièce 59.

Les quatre galets 51-54 sont disposés sur la face transversale la plus proche du pignon, les axes de rotation des galets 51-54 étant orientés parallèlement à l'axe de l'arbre 201. Les galets 51- 54 comportent une piste sur laquelle la surface externe 281 de la couronne 28 est guidée lorsque le disque 40 n'est plus solidaire de l'arbre 201.

Les quatre galets 55-58 sont disposés sur la face transversale opposée aux galets 51-54, les axes de rotation des galets 55-58 étant orientés perpendiculairement à l'axe de l'arbre 201. Les galets 55-58 comportent une piste sur laquelle la surface latérale 282 de la couronne 28 est guidée lorsque le disque 40 n'est plus solidaire de l'arbre.

En référence à la figure 2, la boîte comprend un deuxième module de guidage 60 agencé pour guider le pignon 20 dans son mouvement de rotation lorsque celui-ci est désolidarisé. Le module 60 est disposé, en attente, parallèlement au pignon 20 dans la boîte 100.

Le module de guidage 60 comporte une pièce cylindrique 69 formant support pour des galets de guidage 61-68, les galets étant divisés en deux jeux de quatre galets de guidage 61-64,65-68 disposés respectivement sur chaque face transversale de la pièce 69.

Les quatre galets 61-64 sont disposés sur la face transversale la plus proche du pignon, les axes de rotation des galets 61-64 étant orientés parallèlement à l'axe de l'arbre 201. Les galets 61-64 comportent une piste sur laquelle la surface externe 283 de la couronne 28 est guidée lorsque le disque 40 n'est plus solidaire de l'arbre 201.

Les quatre galets 65-68 sont disposés sur la face transversale opposée aux galets 61-64, les axes de rotation des galets 65-68 étant orientés perpendiculairement à l'axe de l'arbre 201. Les galets 65-68 comportent une piste sur laquelle la surface latérale 282 de la couronne 28 est guidée lorsque le disque 40 n'est plus solidaire de l'arbre 201.

Lors d'un fonctionnement normal du train d'engrenages, le pignon amont 10 entraîne en rotation le pignon 20, le couple reçu étant inférieur à la valeur seuil. Le mouvement de rotation est transmis au pignon aval 30 par le pignon 20. Les modules de guidage 50, 60 sont en attente, i.e. inactifs, et demeurent à distance du pignon 20.

Si l'arbre 201 est grippé, le mouvement de rotation est perturbé. Un surcouple, excédant la valeur seuil, se créée entre le pignon 20 et l'arbre 201 et fait céder les bras 42. La portion « fusible » 422 de chaque bras 42 cède pour désolidariser le pignon 20 de l'arbre 201, le pignon 20 étant entraîné en rotation et l'arbre grippé 201 demeurant immobile

Après désolidarisation du pignon 20, celui-ci n'est pas libre de se déplacer axialement et transversalement. Si le pignon 20 est entraîné par le pignon amont 10 transversalement, la surface externe 281 de la couronne 28 entre en contact avec au moins un des galets de guidage à axe parallèle 51-54, 61-64. Les mouvements transversaux du pignon 20 sont contraints et la rotation du pignon 20 par rapport à l'arbre 201 est guidée dans la boîte 100.

Si le pignon 20 est entraîné par le pignon amont 10 longitudinalement, les surfaces latérales de la couronne 28 entrent en contact avec au moins un des galets de guidage à axe perpendiculaire 55-58, 65-68. Les mouvements axiaux du pignon 20 sont contraints et la rotation du pignon 20 par rapport à l'arbre 201 est guidée.

Les deux modules de guidage 50, 60 permettent de contraindre les mouvements axiaux et transversaux du pignon 20 et de n'autoriser que la rotation du pignon 20 autour de l'arbre 201. Ainsi, le pignon désolidarisé n'entre pas en contact avec la boîte 100 et est guidé dans celle-ci. Malgré la défaillance de l'arbre 201, le rendement de l'engrenage est optimisé et la chaîne cinématique est conservée.

En référence à la figure 3, les modules de guidage 50, 60 comportent autant de galets à axes perpendiculaires que de galets à axes parallèles. Cependant, on peut augmenter le nombre de galets à axes radiaux par rapport au nombre de galets à axes parallèles, ou inversement, en fonction du guidage souhaité.

Un unique module de guidage 50 peut suffire pour guider le pignon 20, cependant lorsque deux modules de guidages 50, 60 sont associés de part et autre du pignon 20, le guidage est optimisé.

Le disque 40, fretté entre le pignon 20 et l'arbre 201, est facilement amovible après rupture. Son remplacement est rapide, simple et peu onéreux. Lorsqu'un arbre 201 est grippé, l'énergie fournie par le surcouple est absorbée par le disque 40 et il n'est pas nécessaire de remplacer des pièces onéreuses telle que l'arbre 201 et le pignon 20.

Au niveau de la turbomachine, l'invention permet à la boîte d'engrenages d'entraîner les machines auxiliaires malgré la défaillance d'un arbre du train d'engrenages.

## Revendications

1. Engrenage comprenant un pignon (20) solidaire d'un arbre (201) monté rotatif dans un support (100) par l'intermédiaire d'un élément sécable (40) agencé pour désolidariser le pignon (20) de l'arbre (201) en cas de surcouple entre le pignon (20) et l'arbre (201), un module de guidage (50) du pignon (20), en attente, étant agencé pour maintenir le pignon (20) en rotation dans le support (100) en cas de désolidarisation du pignon (20) de l'arbre (201), engrenage **caractérisé par le fait que** l'élément sécable (40) est formé d'un disque (40) frété entre le pignon (20) et l'arbre (201), le disque (40) comprenant une pluralité de bras radiaux (42) sécables.

2. Engrenage selon la revendication 1, dans lequel le module de guidage (50) comprend des galets de guidage (51-58) dont l'axe de rotation est orienté perpendiculairement ou parallèlement à l'axe de rotation de l'arbre (201).

3. Engrenage la revendication 2, dans lequel le pignon (20) comprend une partie de surface (282,281) coopérant avec les galets (51-58).

4. Boîte d'engrenages comprenant une pluralité d'engrenages, dont au moins un des engrenages est un engrenage selon l'une des revendications 1 à 3.

5. Boîte d'engrenages selon la revendication 4 entraînant des machines auxiliaires dans une turbomachine.

6. Turbomachine comprenant une boîte d'engrenages de machines auxiliaires selon la revendication 5.

## Claims

1. A gear comprising a pinion (20) integral with a shaft (201) rotatably mounted in a support (100) through a separable element (40) arranged for disengaging the pinion (20) from the shaft (201) in case of overtorque between the pinion (20) and the shaft (201), a module (50) for guiding the pinion (20), in stand-by, being arranged for maintaining the pinion (20) rotating in the support (100) in case the pinion (20) is disengaged from the shaft (201), which gear is **characterised in that** the separable element (40) is made of a disk (40) hooped between the pinion (20) and the shaft (201), the disk (40) comprising a plurality of separable radial arms (42).

2. The gear according to claim 1, wherein the guiding module (50) comprises guiding rollers (51-58) having a rotation axis directed perpendicular or parallel to the axis of rotation of the shaft (201).

3. The gear according to claim 2, wherein the pinion (20) comprises a surface portion (282, 281) cooperating with the rollers (51-58).

4. A gearbox comprising a plurality of gears, at least one which is a gear according to claims 1 to 3.

5. The gearbox according to claim 4, driving auxiliary machines in a turbomarchine.

6. A turbomachine comprising a gearbox of auxiliary machines according to claim 5.

## Patentansprüche

1. Getriebe, umfassend ein Zahnrad (20), das mit einer Achse (201) fest verbunden ist, die über ein teilbares Element (40), das angeordnet ist, um im Falle eines zu hohen Drehmoments zwischen dem Zahnrad (20) und der Achse (201) das Zahnrad (20) von der Achse (201) zu entkoppeln, drehbar in einem Gehäuse (100) montiert ist, wobei eine Führungseinheit (50) des Zahnrades (20), die vorsorglich angeordnet ist, um das Zahnrad (20) im Gehäuse (100) in Drehung zu halten, für den Fall, dass sich Zahnrad (20) und Achse (201) entkoppeln, **dadurch gekennzeichnet, dass** das teilbare Element (40) aus einer Scheibe (40) besteht, die zwischen dem Zahnrad (20) und der Achse (201) eingepresst ist, wobei die Scheibe (40) mehrere teilbare radiale Arme (42) umfasst.

2. Getriebe nach Anspruch 1, wobei die Führungseinheit (50) Führungsrollen (51-58) umfasst, deren Drehachse senkrecht oder parallel zur Drehachse der Achse (201) angeordnet ist.

3. Getriebe nach Anspruch 2, wobei das Zahnrad (20) eine Teilfläche (282, 281) umfasst, die mit den Rollen (51-58) zusammenwirkt.

4. Getriebegehäuse, das mehrere Getriebe umfasst, wovon mindestens eines der Getriebe ein Getriebe nach einem der Ansprüche 1 bis 3 ist.

5. Getriebegehäuse nach Anspruch 4, das mehrere Hilfsmaschinen in einer Turbomaschine antreibt.

6. Turbomaschine, umfassend ein Getriebegehäuse von Hilfsmaschinen nach Anspruch 5.
